# FASCICULE DE BREVET EUROPEEN

(11) **EP 1 033 266 B1**
(45) Date de publication et mention de la délivrance du brevet: **04.06.2003**
(21) Numéro de dépôt: 00400481.8
(22) Date de dépôt: 22.02.2000
(51) Int. Cl.: B60C 3/02, A01B 29/04

(54) **Pneumatique du type semi-creux de structure renforcée**
Halbhohlreifen mit verstärkter Struktur
Semi-tubular tyre having reinforced structure

(30) Priorité: 23.02.1999 FR 9902241
(43) Date de publication de la demande: 06.09.2000
(73) Titulaire: Otico, 77650 Longueville (FR)
(72) Inventeur: Phely, Olivier, 77650 Sainte Colombe (FR)
(74) Mandataire: Bezault, Jean

(56) Documents cités:
- EP-A- 0 340 548
- EP-A- 0 367 992
- FR-A- 2 763 279
- GB-A- 738 112
- US-A- 4 279 285

## Description

L'invention se rapporte aux pneumatiques à usages spéciaux et notamment à ceux destinés à être utilisés pour des matériels agricoles, tels que des rouleaux propres à équiper des machines combinées à des semoirs, à des outils de préparation du sol, etc.

Plus particulièrement, l'invention concerne un pneumatique du type semi-creux, propre à être enfilé autour d'un tube central et à venir en appui jointif contre au moins un autre pneumatique analogue, ledit pneumatique comprenant un fourreau propre à s'adapter autour du tube, deux flancs annulaires raccordés au fourreau et une bande de roulement raccordée aux flancs pour délimiter une chambre interne non-gonflée.

De tels pneumatiques sont appelés "semi-creux" car la chambre interne qu'ils délimitent n'est pas gonflée et est susceptible de communiquer avec le milieu extérieur par au moins une ouverture appropriée.

Habituellement, ces pneumatiques semi-creux sont destinés à être enfilés axialement autour du tube central pour former un rouleau qui convient tout particulièrement pour les rouleaux agricoles, notamment les rouleaux de semoirs, pour créer des sillons dans un sol préalablement ameubli et permettre ainsi de disposer des graines ou semences dans les sillons résultant du passage du rouleau.

On connaît déjà des pneumatiques de ce type, en particulier d'après la demande de brevet français N° 2 763 279 de la Demanderesse.

En service, les pneumatiques de ce type subissent des efforts importants, notamment lorsque le rouleau est déplacé sur un sol en pente ou en dévers, ou lorsque le rouleau subit une modification brusque de trajectoire, par exemple lors d'un demi-tour.

Il en résulte alors le risque que le pneumatique soit écrasé, au moins partiellement, dans la direction axiale (l'expression "direction axiale" étant rapportée à l'axe de rotation du pneumatique) provoquant ainsi la pénétration de terre ou de sable entre le pneumatique considéré et un ou plusieurs pneumatiques adjacents.

En outre, lorsqu'un pneumatique subit un effort important, il existe le risque qu'il soit soumis à une torsion et qu'il communique cette torsion au pneumatique adjacent du fait du contact entre leurs flancs respectifs.

L'invention a essentiellement pour objet de renforcer la structure de tels pneumatiques, et notamment d'augmenter la résistance axiale à l'écrasement et de réduire les risques de torsion.

L'invention propose à cet effet un pneumatique du type semi-creux, comme défini en introduction, lequel incorpore des moyens raidisseurs qui s'étendent dans la direction axiale du pneumatique sur sensiblement toute la longueur axiale du fourreau entre les flancs.

Il en résulte que ces moyens raidisseurs procurent un renfort du pneu dans la région du fourreau et, au moins en partie dans celle des flancs. De ce fait, on obtient une augmentation de la résistance à l'écrasement du pneumatique dans la direction axiale et en outre une augmentation de la résistance du pneumatique à la torsion.

Les moyens raidisseurs, qui sont intégrés dans le fourreau, sont susceptibles de différentes formes de réalisation.

Dans une forme de réalisation préférée de l'invention, ces moyens raidisseurs comprennent des nervures axiales, parallèles et espacées, venues de moulage avec le fourreau, et faisant saillie vers l'intérieur de la chambre interne. De telles nervures présentent une section transversale de forme choisie, par exemple rectangulaire, trapézoïdale, etc.

Ces nervures peuvent être soit pleines, soit évidées dans la région tournée vers le tube.

Ainsi, dans une forme de réalisation de l'invention, les nervures axiales présentent une section transversale ayant sensiblement la forme d'un U pour délimiter une rainure, encore appelée encoche, tournée du côté inférieur du fourreau, c'est-à-dire du côté du tube.

La présence de ces rainures permet notamment d'alléger la structure du pneu en éliminant de la matière.

Avantageusement, ces rainures s'étendent chacune sur sensiblement toute la longueur axiale du fourreau entre les deux flancs. Chacune des rainures peut être soit continue, soit interrompue à mi-longueur par un pont de matière.

Dans une deuxième forme de réalisation de l'invention, les moyens raidisseurs comprennent des inserts, parallèles et espacés, qui sont intégrés dans le fourreau. Il peut s'agir par exemple de parties métalliques en forme de barres allongées, qui sont soit noyées dans l'épaisseur du fourreau, soit encastrées dans des rainures ménagées dans la face interne du rouleau qui est tourné vers le tube central.

Les moyens raidisseurs sont avantageusement espacés deux à deux d'un intervalle angulaire compris entre 10 et 180°, la valeur de cet intervalle dépendant en particulier de la dimension du pneumatique.

Selon un troisième mode de réalisation de la présente invention, les moyens raidisseurs comprennent une bague cylindrique rigide, insérée dans le fourreau après moulage.

Selon une autre caractéristique de l'invention, le pneumatique comprend en outre au moins une ceinture annulaire de renforcement, dont la fonction est essentiellement d'empêcher une déformation circonférentielle du pneumatique par rapport au tube et de contribuer à empêcher à la terre de s'infiltrer entre le pneumatique et le tube central.

Avantageusement, le pneumatique comprend deux ceintures annulaires de renforcement logées respectivement dans les flancs, dans une région proche du fourreau.

De préférence, ces deux ceintures sont logées chacune dans une gorge débouchant vers l'extérieur du pneumatique.

En variante ou en complément, le pneumatique comprend une ceinture annulaire de renforcement logée dans le fourreau, à mi-distance des flancs.

Cette ceinture est avantageusement logée dans une gorge débouchant vers l'extérieur du fourreau.

Toutefois, la ou les ceintures précitées peuvent être aussi noyées dans la matière du pneumatique.

Selon encore une autre caractéristique de l'invention, les flancs du pneumatique sont réalisés plats de manière à procurer un appui direct sans emboîtement entre deux pneumatiques adjacents.

De tels pneumatiques à flancs plats ont l'avantage de se déplacer plus facilement en rotation les uns par rapport aux autres, ce qui permet un mouvement relatif en rotation dans les virages, tout en gardant des joints étanches, empêchant ainsi la pénétration de terre entre les pneumatiques.

Selon encore une autre caractéristique avantageuse de l'invention, les flancs se prolongent chacun par une lèvre annulaire souple dirigée vers l'intérieur et propre à venir en appui élastique étanche contre le tube central autour duquel ledit pneumatique est enfilé.

La présence de ces lèvres contribue essentiellement à éviter que de la terre puisse s'infiltrer entre le fourreau et le tube central.

Dans la description qui suit, faite seulement à titre d'exemple, on se réfère aux dessins annexés, sur lesquels :
- la figure 1 est une vue partielle en coupe axiale d'un pneumatique du type semi-creux selon une première forme de réalisation de l'invention
- la figure 2 est une vue partielle en coupe selon la ligne II-II de la figure 1 ;
- la figure 3 est une vue en coupe analogue à la figure 1 dans une autre forme de réalisation de l'invention ;
- la figure 4 représente, à échelle agrandie, le détail IV de la figure 3 ;
- la figure 5 est une vue analogue à la figure 4 dans une variante de réalisation ;
- la figure 6 est une vue en coupe analogue à la figure 1 dans une variante de réalisation des moyens raidisseurs ; et
- la figure 7 est une vue partielle en coupe axiale d'un pneumatique selon le troisième mode de réalisation précité.

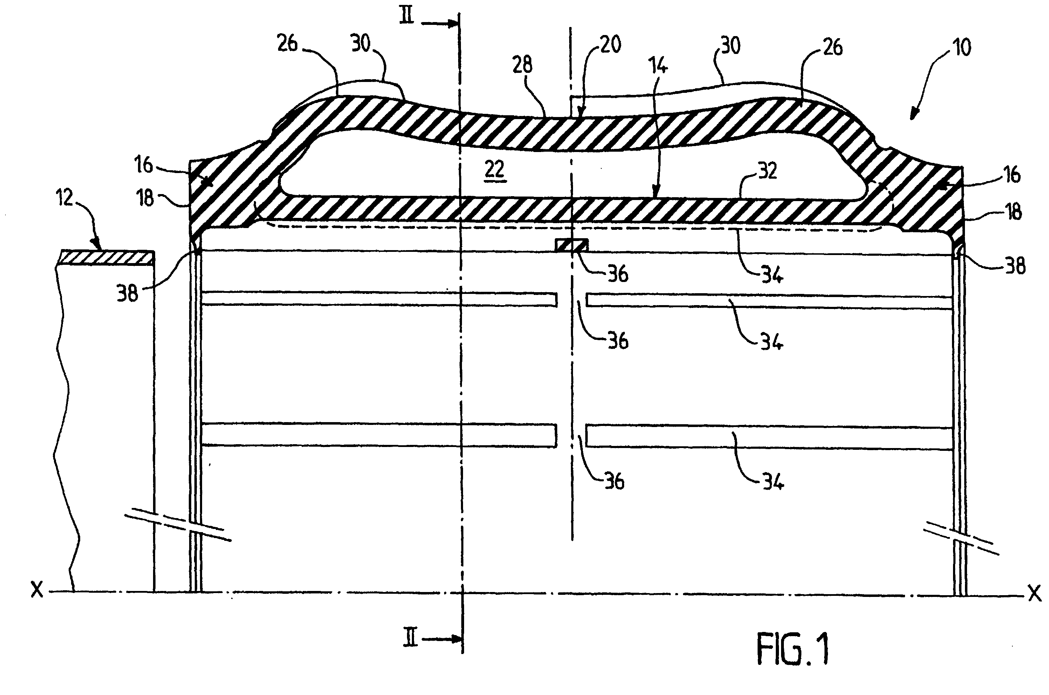

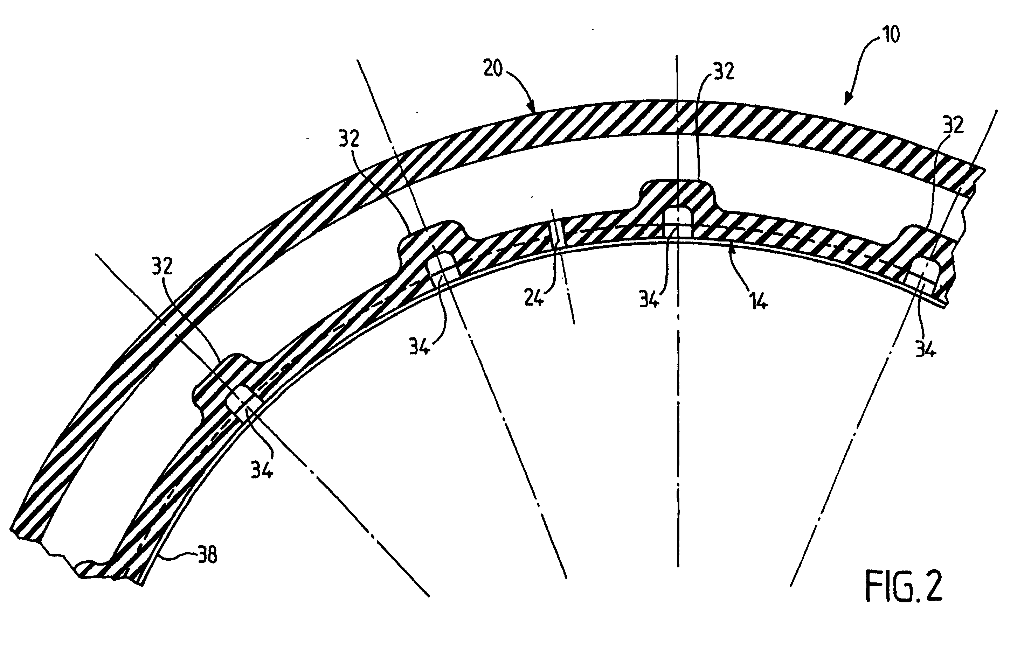

On se réfère d'abord aux figures 1 et 2 qui représentent un pneumatique 10 du type semi-creux propre à être enfilé autour d'un tube central 12 réalisé en acier et monté en rotation autour d'un axe XX. Le tube 12 est destiné à recevoir plusieurs pneumatiques 10 disposés adjacents pour constituer un rouleau agricole, par exemple un rouleau pour semoir. Ces pneumatiques sont empilés les uns contre les autres dans la direction de l'axe XX et maintenus serrés axialement par des moyens appropriés (non représenté) tels que des flasques d'extrémité, etc.

Le pneumatique 10 des figures 1 et 2 est du type semi-creux et réalisé à partir d'un matériau souple approprié qui peut être soit un caoutchouc naturel, soit un ou plusieurs caoutchouc synthétique, soit encore un de leur mélange. Le pneumatique 10 comprend un fourreau 14 de configuration cylindrique propre à s'adapter autour du tube central 12. Le fourreau se raccorde à deux flancs annulaires 16 dont chacun comporte, dans l'exemple, une face annulaire plane 18 définissant un plan perpendiculaire à l'axe XX. On comprendra que, lorsque deux pneumatiques 10 adjacents sont enfilés et serrés axialement autour du tube central 12, ils viennent en contact mutuel par leurs faces respectives 18, sans emboîtement. Bien entendu, cela n'écarte pas la possibilité, pour des applications particulières, de prévoir des moyens de liaison entre les flancs respectifs de deux pneumatiques adjacents.

Le pneumatique 10 comprend en outre une bande de roulement 20 qui se raccorde aux flancs 16. Le fourreau 14, les flancs 16 et la bande de roulement 20 délimitent conjointement une chambre interne 22 de configuration annulaire aplatie. Cette chambre n'est pas gonflée et communique avec le milieu extérieur par au moins une ouverture 24 pratiquée dans l'épaisseur du fourreau (figure 2).

Dans l'exemple, la bande de roulement 20 comporte deux profils 26 ayant chacun la forme d'un dôme peu accentué et séparé par une région centrale 28 en dépression. En outre, la surface de roulement 20 comporte, du côté extérieur, des crampons 30 de forme choisie, qui sont venus de moulage avec le pneumatique.

Le fourreau 14 comprend des nervures axiales 32 (figures 1 et 2) constituant des moyens raidisseurs pour renforcer la résistance du pneumatique à l'écrasement dans le sens axial. Ces nervures 32 sont disposées parallèles à l'axe XX et espacées les unes des autres. Dans l'exemple, on trouve dix huit nervures 32 espacées chacune d'un angle A de 22,5° (figure 2).

Toutefois, l'angle A qui sépare deux nervures, ou d'autres moyens raidisseurs, peut être différent. Il est généralement compris entre 10° et 180°. Les nervures 32 sont réalisées en saillie vers l'intérieur de la chambre 22 et en direction de la bande de roulement 20. Comme on peut le voir plus particulièrement sur la figure 2, chacune des nervures 32 présente une section transversale ayant sensiblement la forme d'un U, dont l'ouverture est tournée vers le centre du pneu. Il en résulte que chaque nervure délimite une rainure axiale 34, encore appelée encoche, tournée du côté du tube central. Chacune des rainures 34 a une section transversale de forme approximativement carrée. Ces rainures contribuent notamment à diminuer la quantité de matière utilisée pour fabriquer le pneu.

Les nervures 32 s'étendent chacune sur pratiquement toute la longueur axiale du fourreau 14, comme délimité entre les flancs 16, et il en est de même pour chacune des rainures 34. En outre, chacune des rainures 34 est interrompue à mi-longueur par un pont de matière 36, dont la présence est facultative. Lorsque ce pont de matière est présent, il contribue à former une ceinture ou un cordon de maintien circonférentiel qui évite la déformation au décollement du pneumatique par rapport au tube central 10.

Dans la forme de réalisation des figures 1 et 2, la ceinture 36 est venue de moulage avec le pneumatique et est donc réalisé en caoutchouc ou analogue. Toutefois, il peut s'agir d'une ceinture réalisée en un autre matériau, par exemple en métal ou en matière plastique, qui est alors insérée au moulage dans le fourreau 14. Cette ceinture 36 s'étend à mi-distance des flancs 16.

Comme on peut le voir sur les figures 1 et 2, chacun des flancs 16 se prolonge par une lèvre annulaire souple 38 dirigée vers l'intérieur, c'est-à-dire vers l'axe XX, et propre à venir en appui élastique étanche contre le tube central 12 autour duquel le pneumatique est enfilé. Cette lèvre exerce une action de fermeture, faisant un effet de joint racleur sur le tube central ce qui permet d'empêcher à la terre de pénétrer entre le fourreau et le tube central. En outre, cette lèvre contribue à empêcher un éventuel allongement circonférentiel dû à la présence des rainures.

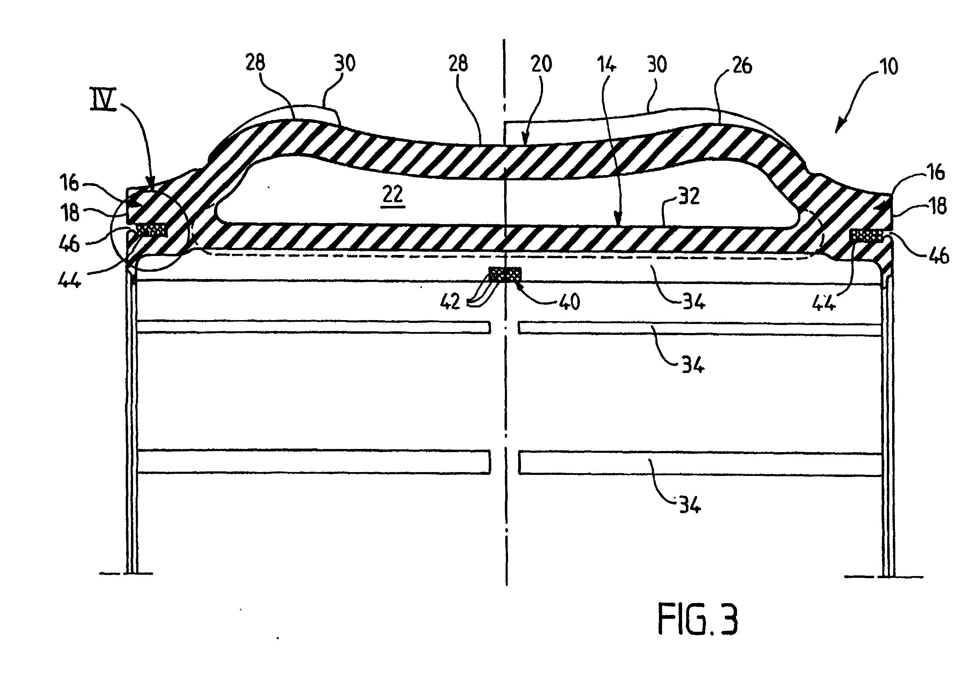

Le pneumatique de la figure 3 s'apparente à celui de la figure 1 et les éléments en commun sont désignés par les mêmes références numériques.

Dans la forme de réalisation de la figure 3, le tube comporte aussi une ceinture annulaire de renforcement 40 logée dans le fourreau à mi-distance des flancs. Toutefois, cette ceinture 40 est formée ici d'une pluralité de câbles métalliques 42 noyés dans le fourreau lui même.

Par ailleurs, le pneumatique de la figure 3 comprend deux ceintures annulaires de renforcement 44 logées respectivement dans des gorges 46 formées dans les flancs 16 du pneumatique, dans des régions proches du fourreau. Les gorges 46 débouchent vers l'extérieur du pneumatique, c'est-à-dire vers leurs faces annulaires respectives 18.

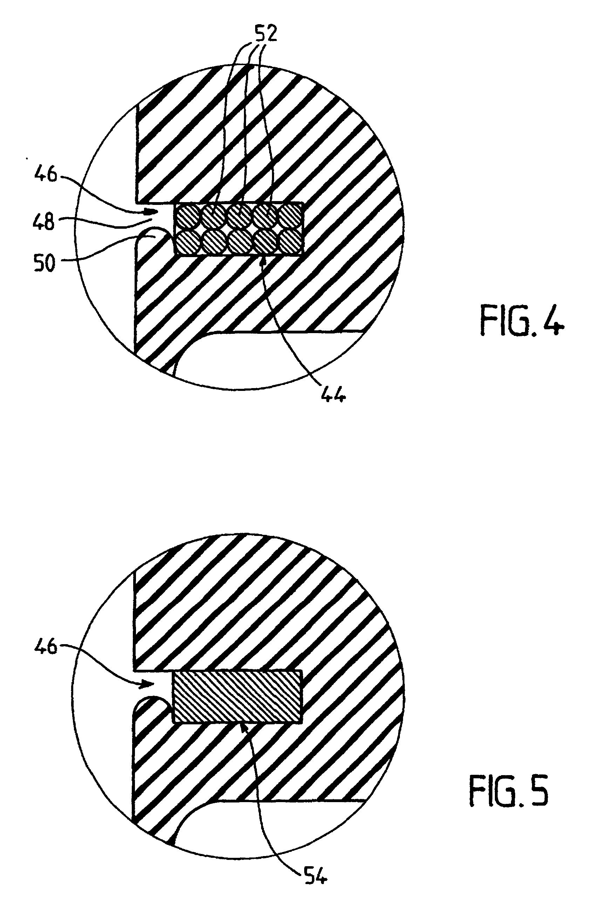

Comme on peut le voir en particulier sur le détail de la figure 4, chacune des gorges 46 comporte une ouverture étroite 48 délimitée, du côté intérieur, par une nervure annulaire 50. Il en résulte que chacune des ceintures 44 peut être introduite en force, et qu'elle ne peut ensuite quitter le pneumatique du fait de l'entrée étroite de la gorge. Les ceintures 44 (figures 3 et 4) sont formées ici par des câbles métalliques 52 disposés juxtaposés.

Dans la forme de réalisation de la figure 5, chacune des gorges 46 reçoit une ceinture 54 qui, dans l'exemple, est constitué par un fer plat. Celui est également introduit en force dans la gorge 46.

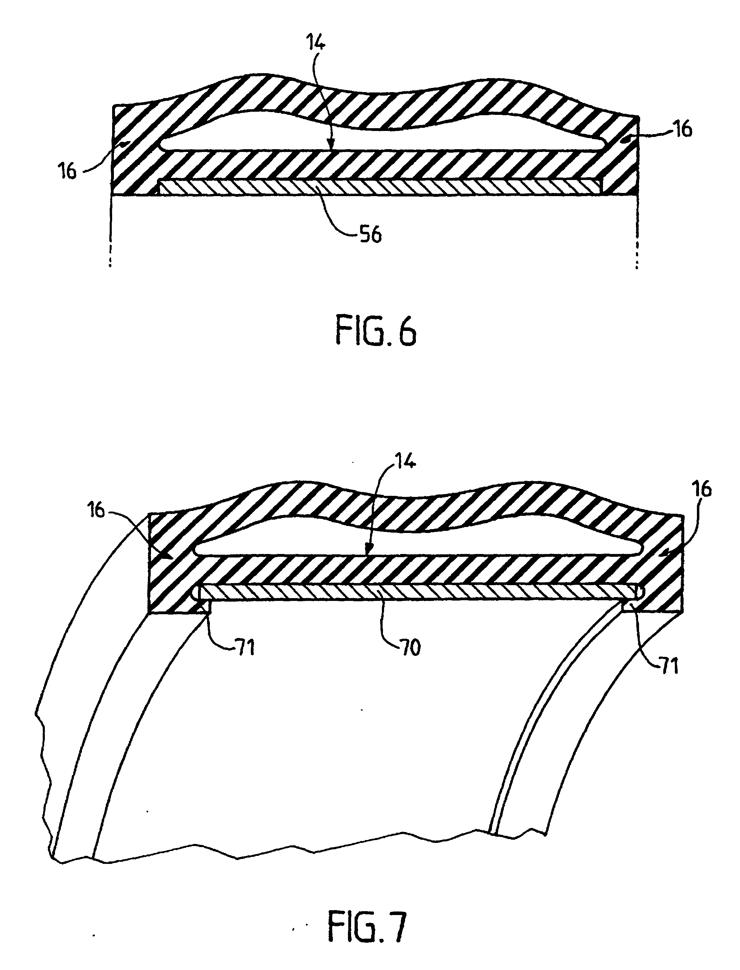

Dans la forme de réalisation de la figure 6, le pneumatique comprend des moyens raidisseurs constitués ici par des inserts 56, parallèles et espacés, qui sont intégrés dans le fourreau.

Ces inserts sont des barres métalliques ou analogues qui sont soit noyées dans la masse du fourreau, soit encastrées chacun dans une gorge axiale formée sur la face du fourreau tournée vers le tube central. En variante, il est possible de combiner ces inserts 56 avec des nervures 32 telles que définies précédemment, par exemple en plaçant ces inserts dans les rainures 34.

On se réfère maintenant à la figure 7 pour décrire un pneumatique selon un troisième mode de réalisation de la présente invention. Le pneumatique comprend ici une bague cylindrique rigide 70, formant moyens raidisseurs. En pratique, cette bague 70 est réalisée sous la forme d'une tôle métallique qui s'insère dans le fourreau 14, sur toute sa périphérie. Dans le sens de sa largeur, elle s'étend axialement entre deux nervures formées par les rebords 71 que portent les flancs 16 du pneumatique. Il est prévu, dans l'exemple décrit, d'insérer la bague 70 après moulage du pneumatique.

On comprendra que l'invention est susceptible de nombreuses variantes du moment que le pneumatique comporte des moyens raidisseurs logés dans le fourreau pour accroître la résistance du pneumatique, notamment la résistance axiale à l'écrasement et la résistance à la torsion.

L'invention trouve essentiellement une application aux pneumatiques à usages spéciaux, notamment à ceux destinés à constituer des rouleaux pour différents types de machines agricoles.

## Revendications

1. Pneumatique du type semi-creux, propre à être enfilé autour d'un tube central (12) et à venir en appui jointif contre au moins un autre pneumatique analogue, ledit pneumatique (10) comprenant un fourreau (14) propre à s'adapter autour du tube central (12), deux flancs annulaires (16) raccordés au fourreau et une bande de roulement (20) raccordée aux flancs pour délimiter une chambre interne (22) non-gonflée,
**caractérisé en ce que** le fourreau (14) incorpore des moyens raidisseurs (32, 34 ; 56 ; 70) qui s'étendent dans la direction axiale (XX) du pneumatique sur sensiblement toute la longueur axiale du fourreau (14) entre les flancs (16).

2. Pneumatique selon la revendication 1, **caractérisé en ce que** les moyens raidisseurs (32, 34 ; 56) sont espacés les uns des autres.

3. Pneumatique selon la revendication 2, **caractérisé en ce que** les moyens raidisseurs comprennent des nervures axiales (32), parallèles et espacées, venues de moulage avec le fourreau (14), et faisant saillie vers l'intérieur de la chambre interne (22).

4. Pneumatique selon la revendication 3, **caractérisé en ce que** les nervures axiales (32) présentent une section transversale ayant sensiblement la forme d'un U pour délimiter une rainure ou encoche (34) tournée du côté intérieur du fourreau, ou côté du tube central (12).

5. Pneumatique selon la revendication 4, **caractérisé en ce que** les rainures (34) s'étendent chacune sur sensiblement toute la longueur axiale du fourreau (14) entre les deux flancs (16).

6. Pneumatique selon l'une des revendications 4 et 5, **caractérisé en ce que** chacune des rainures (34) est interrompue à mi-longueur par un pont de matière (36) faisant partie d'une ceinture circonférentielle.

7. Pneumatique selon la revendication 2, **caractérisé en ce que** les moyens raidisseurs comprennent des inserts (56), parallèles et espacés qui sont intégrés dans le fourreau.

8. Pneumatique selon l'une des revendications 2 à 7, **caractérisé en ce que** les moyens raidisseurs (32, 34 ; 56) sont espacés deux à deux d'un intervalle angulaire compris entre 10 et 180°.

9. Pneumatique selon la revendication 1, **caractérisé en ce que** les moyens raidisseurs comprennent une bague cylindrique rigide (70) insérée dans le fourreau après moulage.

10. Pneumatique selon l'une des revendications précédentes, **caractérisé en ce qu'**il comprend au moins une ceinture annulaire de renforcement (36, 40, 44, 54).

11. Pneumatique selon la revendication 10, **caractérisé en ce qu'**il comprend deux ceintures annulaires de renforcement (44, 54) logées respectivement dans les flancs (16), dans une région proche du fourreau (14).

12. Pneumatique selon la revendication 11, **caractérisé en ce que** chacune des deux ceintures annulaires de renforcement (44, 54) est logée dans une gorge (46) débouchant vers l'extérieur du pneumatique.

13. Pneumatique selon l'une des revendications 10 à 12, **caractérisé en ce qu'**il comprend une ceinture annulaire de renforcement (36, 40) logée dans le fourreau (14), à mi-distance des flancs (16).

14. Pneumatique selon la revendication 13, **caractérisé en ce que** la ceinture annulaire de renforcement (40) est logée dans une gorge débouchant vers l'extérieur du fourreau.

15. Pneumatique selon l'une des revendications précédentes, **caractérisé en ce que** les flancs (16) sont réalisés plats de manière à procurer un appui direct sans emboîtement entre deux pneumatiques adjacents.

16. Pneumatique selon l'une des revendications précédentes, **caractérisé en ce que** les flancs (16) se prolongent chacun par une lèvre annulaire souple (18) dirigée vers l'intérieur et propre à venir en appui élastique étanche contre le tube central (12) autour duquel ledit pneumatique est enfilé.

## Patentansprüche

1. Halbhohlreifen, der dazu eingerichtet ist, auf ein Zentralrohr (12) aufgezogen zu werden und sich an wenigstens einen weiteren, vergleichbaren Reifen anzulegen, wobei der Reifen (10) eine Manschette (14) zur Auflage auf dem Zentralrohr (12), zwei ringförmige Flanken (16), die mit der Manschette verbunden sind, und eine Laufdecke (20) aufweist, die mit den Flanken verbunden ist, um eine innere, nicht aufgeblasene Kammer (22) zu begrenzen,
**dadurch gekennzeichnet, daß** die Manschette (14) Verstärkungseinrichtungen (32, 34; 56; 70) enthält, die sich in axialer Richtung (XX) des Reifens über im wesentlichen die gesamte axiale Länge der Manschette (14) zwischen den Flanken (16) erstrecken.

2. Reifen nach Anspruch 1, **dadurch gekennzeichnet, daß** die Verstärkungseinrichtungen (32, 34; 56) voneinander Abstand haben.

3. Reifen nach Anspruch 2, **dadurch gekennzeichnet, daß** die Verstärkungseinrichtungen (32) parallele, in gegenseitigem Abstand angeordnete Rippen (32) aufweisen, die beim Formen mit der Manschette (14) entstanden sind und in den Innenraum der inneren Kammer (22) vorstehen.

4. Reifen nach Anspruch 3, **dadurch gekennzeichnet, daß** die axialen Rippen (32) einen Querschnitt aufweisen, der im wesentlichen die Form eines U hat, um eine Rille oder Vertiefung (34) zu begrenzen, die zur Innenseite der Manschette oder zur Seite des Zentralrohrs (12) gerichtet ist.

5. Reifen nach Anspruch 4, **dadurch gekennzeichnet, daß** die Rillen (34) sich jeweils über die im wesentlichen gesamte axiale Länge der Manschette (14) zwischen den zwei Flanken (16) erstrecken.

6. Reifen nach einem der Ansprüche 4 und 5, **dadurch gekennzeichnet, daß** jede der Rillen (34) an der Mitte ihrer Längserstreckung durch eine Materialbrücke (36) unterbrochen ist, die Teil eines in Umfangsrichtung verlaufenden Gürtels ist.

7. Reifen nach Anspruch 2, **dadurch gekennzeichnet, daß** die Verstärkungseinrichtungen in gegenseitigem Abstand parallel zueinander angeordnete Einlagen (56) enthalten, die in die Manschette integriert sind.

8. Reifen nach einem der Ansprüche 2 bis 7, **dadurch gekennzeichnet, daß** die Verstärkungseinrichtungen (32, 34; 56) jeweils paarweise in einem Winkelabstand angeordnet sind, der zwischen 10° und 180° liegt.

9. Reifen nach Anspruch 1, **dadurch gekennzeichnet, daß** die Verstärkungseinrichtungen einen starren, zylindrischen Ring (70) enthalten, der nach dem Formen in die Manschette eingelegt ist.

10. Reifen nach einem der vorhergehenden Ansprüche, **dadurch gekennzeichnet, daß** er wenigstens einen ringförmigen Verstärkungsgürtel (36, 40, 44, 54) aufweist.

11. Reifen nach Anspruch 10, **dadurch gekennzeichnet, daß** er zwei ringförmige Verstärkungsgürtel (44, 54) enthält, die jeweils in den Flanken (16) in einem nahe der Manschette (14) liegenden Bereich angeordnet sind.

12. Reifen nach Anspruch 11, **dadurch gekennzeichnet, daß** jeder der zwei ringförmigen Verstärkungsgürtel (44, 54) in einer Kehle (46) untergebracht ist, der in die Außenseite des Reifens mündet.

13. Reifen nach einem der Ansprüche 10 - 12, **dadurch gekennzeichnet, daß** er einen ringförmigen Verstärkungsgürtel (36, 40) enthält, der in der Manschette (14) in der Mitte zwischen den Flanken (16) angeordnet ist.

14. Reifen nach Anspruch 13, **dadurch gekennzeichnet, daß** der ringförmige Verstärkungsgürtel (40) in einer Kehle liegt, die in die Außenseite der Manschette mündet.

15. Reifen nach einem der vorhergehenden Ansprüche, **dadurch gekennzeichnet, daß** die Flanken (16) eben ausgebildet sind, um eine direkte Anlage zweier benachbarter Reifen ohne Ineinandergreifen derselben zu erzielen.

16. Reifen nach einem der vorhergehenden Ansprüche, **dadurch gekennzeichnet, daß** die Flanken (16) sich jeweils in einer weichen, ringförmigen Lippe (38) fortsetzen, die nach innen gerichtet ist und dazu dient, sich elastisch an das Zentralrohr (12) dicht anzulegen, auf das der Reifen aufgezogen ist.

## Claims

1. Semi-tubular tyre to be fitted around a central tube (12) and to abut edge to edge against at least one other similar tyre, the said tyre (10) comprising a sheath (14) to be fitted around a central tube (12), two annular sides (16) connected to the sheath and a tread (20) connected to the sides to define a non-inflated internal chamber (22), **characterised in that** the sheath (14) incorporates stiffening means (32, 34; 56; 70) which extend in the axial direction (XX) of the tyre over substantially the whole axial length of the sheath (14) between the sides (16).

2. Tyre according to claim 1, **characterised in that** the stiffening means (32, 34; 56) are separate from each other.

3. Tyre according to claim 2, **characterised in that** the stiffening means comprise separate, parallel, axial ribs (32) moulded from the sheath (14) and projecting towards the interior of the internal chamber (22).

4. Tyre according to claim 3, **characterised in that** the axial ribs (32) present a transverse section which is substantially U-shaped to define a groove or notch (34) turned towards the inside of the sheath, or the central tube (12).

5. Tyre according to claim 4, **characterised in that** the grooves (34) each extend over substantially the whole length of the sheath (14) between the two sides (16).

6. Tyre according to one of claims 4 and 5, **characterised in that** each of the grooves (34) is interrupted mid-length by a bridge of material (36) which is part of a circumferential belt.

7. Tyre according to claim 2, **characterised in that** the stiffening means comprise separate, parallel inserts (56) which are integrated in the sheath.

8. Tyre according to one of claims 2 to 7, **characterised in that** the stiffening means (32, 34; 56) are spaced two by two at an angular interval of between 10 and 180°.

9. Tyre according to claim 1, **characterised in that** the stiffening means comprise a rigid cylindrical ring (70) inserted in the sheath after moulding.

10. Tyre according to one of the preceding claims, **characterised in that** it comprises at least one annular reinforcement belt (36, 40, 44, 54).

11. Tyre according to claim 10, **characterised in that** it comprises two annular reinforcement belts (44, 54) housed respectively in the sides (16) in an area close to the sheath (14).

12. Tyre according to claim 11, **characterised in that** each of the two annular reinforcement belts (44, 54) is housed in a groove (46) opening towards the outside of the tyre.

13. Tyre according to one of claims 10 to 12, **characterised in that** it comprises an annular reinforcement belt (36, 40) housed in the sheath (14) half-way between the sides (16).

14. Tyre according to claim 13, **characterised in that** the annular reinforcement belt (40) is housed in a groove opening towards the outside of the sheath.

15. Tyre according to one of the preceding claims, **characterised in that** the sides (16) are made flat so as to offer direct support without two adjacent tyres being fitted together.

16. Tyre according to one of the preceding claims, **characterised in that** the sides (16) are each extended by a inward facing, flexible, annular lip (18) intended to come into resilient and airtight engagement against the central tube (12) around which the said tyre is fitted.
